# EUROPÄISCHE PATENTANMELDUNG

(11) **EP 1 348 494 A2**
(43) Veröffentlichungstag der Anmeldung: **01.10.2003**
(21) Anmeldenummer: 03007068.4
(22) Anmeldetag: 27.03.2003
(51) Int. Cl.: B07B 13/18, B07B 1/18, B07B 1/46

(54) **Siebvorrichtung mit unterschiedlicher Lochung**

(30) Priorität: 28.03.2002 DE 10214326; 27.09.2002 DE 10245446
(71) Anmelder: Huning Umwelttechnik GmbH + Co. KG, 49326 Melle (DE)
(72) Erfinder: Huning, Walter, 49326 Melle (DE)
(74) Vertreter: Busse & Busse Patentanwälte

(57) **Zusammenfassung**

Die vorliegende Erfindung bezieht sich auf eine Siebvorrichtung (2) mit zumindest zwei aufeinander liegenden Siebelementen (4), die jeweils eine Mehrzahl von Sieblöchern (8) aufweisen, die abhängig von der relativen Lage der Siebelemente (4) zueinander gemeinsame Sieböffnungen (10) ausbilden.

Um aus einer Charge von Siebgut mehrere Fraktionen mit unterschiedlicher Partikelgröße aussieben zu können, wird vorgeschlagen, daß Sieböffnungen (10) der Siebvorrichtung (2) in Förderrichtung (F) unterschiedliche Lochgrößen aufweisen und/oder unterschiedliche Lochgrößen von Sieböffnungen (10) in Förderrichtung (F) durch das Verstellen in eine relative Lage der Siebelemente (4) zueinander einstellbar sind.

## Beschreibung

Die vorliegende Erfindung bezieht sich auf eine Siebvorrichtung mit zumindest zwei aufeinanderliegenden Siebelementen, die jeweils eine Mehrzahl von Sieblöchern aufweisen, die abhängig von der relativen Lage der Siebelemente zueinander gemeinsame Sieböffnungen ausbilden.

Eine gattungsgemäße Siebvorrichtung ist aus der Offenlegungsschrift DE 40 27 111 bekannt. Die dort beschriebene Siebvorrichtung ermöglicht es, durch Verstellung der relativen Lage der Siebelemente zueinander die Sieböffnung zu verändern. Um mit der Siebvorrichtung unterschiedliche Partikelgrößen mit der gleichen Siebvorrichtung aussieben zu können, muß nicht mehr das gesamte Sieb ausgebaut werden, sondern es genügt, die Größe der Sieböffnung durch eine einfache Verstellung der Lage eines Siebelementes an geänderte Größenanforderung anzupassen. Trotz der aus der Verstellmöglichkeit resultierenden größeren Flexibilität hinsichtlich der aussiebbaren Fraktionen kann die offenbarte Siebvorrichtung über die Sieblänge hinweg immer nur eine bestimmte Fraktion des Siebgutes aussieben. Es ist nicht möglich, bei der Beschickung der Siebvorrichtung mit einem Siebgut gleichzeitig mehrere unterschiedliche Fraktionen eines Siebgutes auszusieben.

Es ist die Aufgabe der vorliegenden Erfindung, die Flexibilität einer gattungsgemäßen Siebvorrichtung zu erhöhen.

Die Aufgabe wird gelöst, in dem die Sieböffnungen in Förderrichtung unterschiedliche Lochgrößen aufweisen und/oder unterschiedliche Lochgrößen der Sieböffnungen in Förderrichtung durch das Verstellen in eine relative Lage der Siebelemente zueinander einstellbar sind.

Erfindungsgemäß weisen die Sieböffnungen in Förderrichtung gesehen also entweder von Anfang an unterschiedliche Lochgrößen auf, oder die unterschiedlichen Lochgrößen der Sieböffnungen können nachträglich durch das Verstellen zumindest eines Siebelementes eingestellt werden. Bei einer solchen Ausgestaltung der Siebvorrichtung ist es möglich, bei einer Beschickung der Siebvorrichtung mit einem Siebgut unterschiedliche Fraktionen des Siebgutes auszusieben. Dabei bleibt der Vorteil der gattungsgemäßen Siebvorrichtung, eine große Spreizung von möglichen Gutfraktionen durch eine leichte Verstellbarkeit der Siebvorrichtung nutzen zu können, im vollem Umfang erhalten. Aufgrund der Variabilität der erfindungsgemäßen Siebvorrichtung kann diese über den gesamten Förderweg auf eine einheitliche Lochgröße eingestellt werden, so daß sich gegenüber den herkömmlichen Siebvorrichtungen kein Leistungsnachteil ergibt. Bei einer Verstellung der Lochweite von Sieblöchern in einem Teilbereich der Förderstrecke kann in diesem Teilbereich eine andere Fraktion des Siebgutes ausgesiebt werden. In dem Teilbereich mit unveränderter Lochweite der Sieböffnung werden nach wie vor identische Fraktionen ausgesiebt. Um bei unterschiedlicher Größe der Partikel des Siebgutes jeweils saubere Fraktionen zu erzielen, sollten die kleinen Sieblöcher möglichst am Anfang der Förderstrecke des Siebgutes liegen und die jeweils größeren Lochgrößen den kleineren Lochgrößen nachgeordnet sein. Dabei ist es unwesentlich, ob der variable Teilbereich der Siebvorrichtung im vorderen oder hinteren Teil der Siebstrecke oder in einer mittigen Lage angeordnet ist oder ob die Förderstrecke in mehrere variable Teilbereiche unterteilt ist, die jeweils auf unterschiedliche Lochgrößen einstellbar sind.

Die Erfindung soll nun anhand von Ausführungsbeispielen näher erläutert werden.
Es zeigen:
- Fig. 1:: eine Seitenansicht auf eine Siebvorrichtung,
- Fig. 2:: eine Sicht von oben auf eine Siebvorrichtung,
- Fig. 3:: eine Seitenansicht auf die Siebvorrichtung aus Fig. 1 mit veränderter Relativlage der Siebelemente,
- Fig. 4:: eine Draufsicht auf die Siebvorrichtung aus Fig. 2 mit veränderter Relativlage der Siebelemente,
- Fig. 5:: eine Draufsicht auf eine motorische Verstellvorrichtung,
- Fig. 6:: eine Querschnittsansicht durch eine motorische Verstellvorrichtung,
- Fig. 7:: eine Detailansicht eines Spannelementes
- Fig. 8 A - D:: unterschiedliche Lochbilder bei rautenförmigen Sieblöchern,
- Fig. 9 A - D:: unterschiedliche Lochbilder bei ellipsenförmigen Sieblöchern,

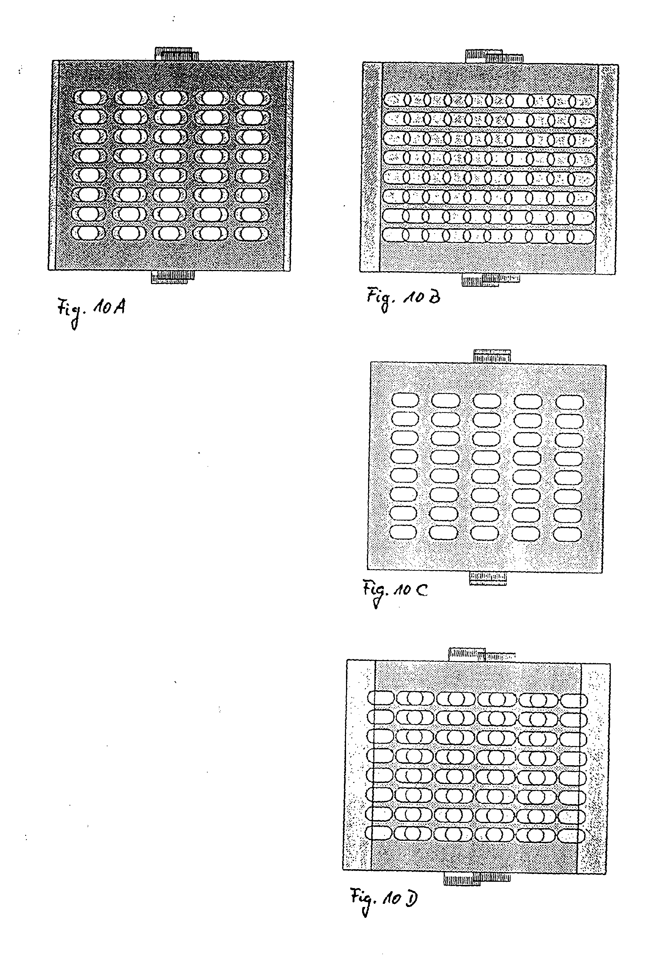

- Fig. 10 A - D:: unterschiedliche Lochbilder bei quer angeordneten langlochförmigen Sieblöchern,

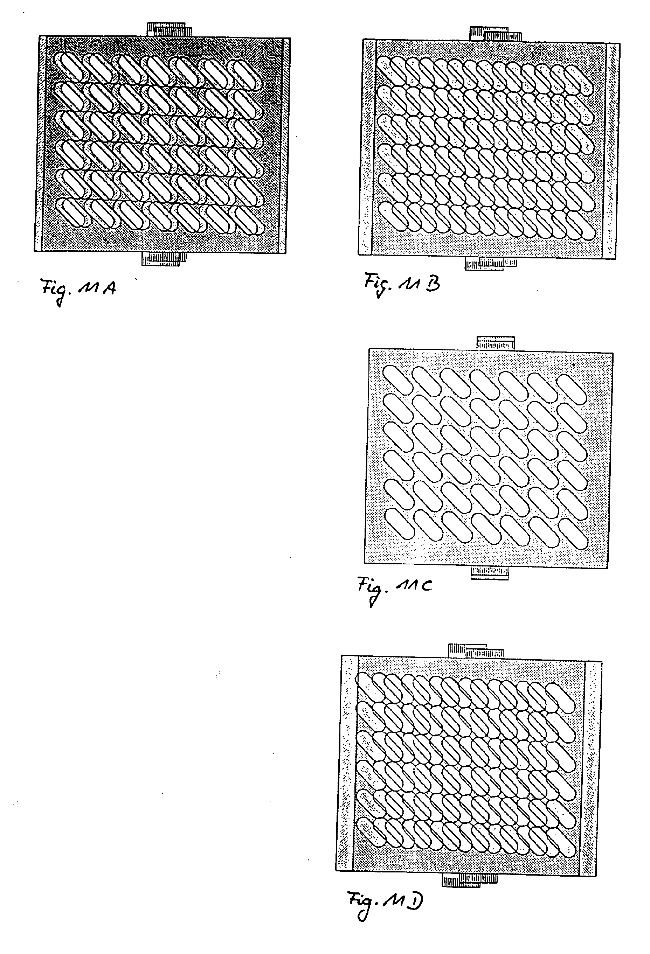

- Fig. 11 A - D:: unterschiedliche Lochbilder bei diagonal angeordneten langlochförmigen Sieblöchern,
- Fig. 12:: eine Siebvorrichtung mit einer Verstellung um eine Drehachse,
- Fig. 13 - 14:: eine motorische Spannvorrichtung,
- Fig. 15:: ein besonderes Lochgrößenverhältnis.

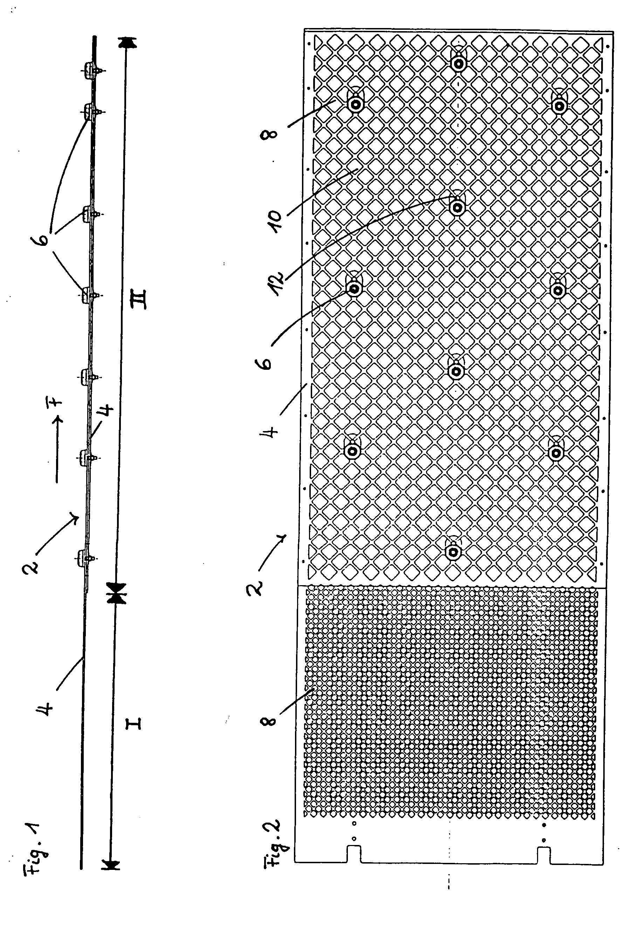

In Fig. 1 ist in einer Seitenansicht eine Siebvorrichtung 2 zu sehen, die im Ausführungsbeispiel aus einem oberen Siebelement 4 und einem unteren Siebelement 4 zusammengesetzt ist. Die Siebelemente 4 werden durch Spannelemente 6 aufeinandergepreßt. In der Seitenansicht ist gut erkennbar, daß das obere Siebelement 4 eine größere Länge aufweist als das untere Siebelement 4. Im Ausführungsbeispiel wird das Siebgut in Förderrichtung F über die Siebvorrichtung 2 befördert. Das überstehende Ende des oberen Siebelementes 4 bildet einen Teilbereich I, während der Abschnitt, in dem die oberen und unteren Siebelemente 4 aufeinander liegen, einen Teilabschnitt II ausbilden.

In Fig. 2 sind die Siebelemente 4 aus einer Draufsicht von oben zu sehen. Die Spannelemente 6 sind so über die Siebfläche im Teilbereich II verteilt, daß sich ein ausreichender Anpreßdruck zum Aneinanderhalten der Siebelemente 4 ergibt. Im Teilbereich I weist das allein sichtbare obere Siebelement 4 kleine Sieblöcher 8 auf, während im Teilbereich II die Sieblöcher 8 eine größere Lochgröße aufweisen. In der Fig. 2 ist das untere Siebelement nicht sichtbar, da dieses im Ausführungsbeispiel im Teilbereich 2 eine identische Lochmustergestaltung wie das obere Siebelement 4 aufweist. Dabei liegt das untere Siebelement 4 in einer solchen relativen Lage zum oberen Siebelement 4, daß die übereinanderliegenden Sieblöcher 8 des unteren und oberen Siebelementes 4 eine deckungsgleiche gemeinsame Sieböffnung 10 ausbilden.

Mit diesem Lochbild können von einem Siebgut drei Fraktionen ausgesiebt werden: Im Teilbereich I wird die Fraktion mit der kleinsten Partikelgröße ausgesiebt, im Teilbereich II wird die Fraktion mit einer mittleren Partikelgröße ausgesiebt, und das verbleibende Siebgut, das weder im Teilbereich I noch im Teilbereich II durch die Sieblöcher fallen konnte, stellt die dritte Fraktion mit großen Partikeln dar. Während die im Teilbereich I ausgesiebte Fraktion nicht beeinflußbar ist, da die Sieblöcher eine feste Lochgröße aufweisen, kann die Lochgröße im Teilbereich II variiert werden. Bei einer Verschiebung des oberen oder unteren Siebelementes 4 relativ zum anderen Siebelement 4 liegen die jeweiligen Sieblöcher 8 nicht mehr deckungsgleich übereinander, sondern der Bereich eines Siebloches eines Siebelementes 4 wird zumindest teilweise von den Stegen des anderen Siebelementes 4 verdeckt, so daß sich eine verkleinerte gemeinsame Sieböffnung 10 ergibt.

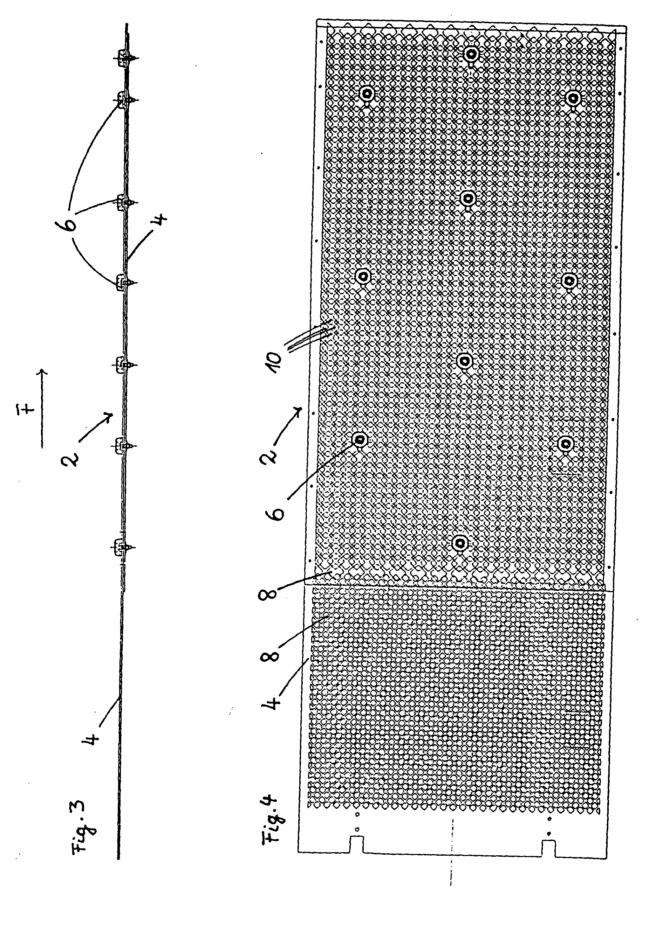

Eine solche veränderte relative Lage der Siebelemente 4 zueinander ist ausgehend von dem in den Fig. 1 und 2 gezeigten Ausführungsbeispiel in den Fig. 3 und 4 gezeigt. In Fig. 3 ist in der Seitensicht erkennbar, daß das obere Siebelement 4 in Förderrichtung über das feststehende untere Siebelement 4 verschoben ist. In der in Fig. 4 gezeigten Draufsicht ist erkennbar, daß das Lochbild im Teilbereich I unverändert geblieben ist, während sich im Teilbereich II eine deutliche Veränderung des Lochbildes ergeben hat. In diesem Ausführungsbeispiel ergibt sich für ein Siebloch 8 eines Siebelementes 4 eine Überdeckung mit vier Sieblöchern 8 des anderen Siebelementes 4, so daß in dieser Siebstellung in jedem Siebloch 8 vier gemeinsame Sieböffnungen 10 ausgebildet sind. Da im in Figur 4 gezeigten Ausführungsbeispiel die Lochgröße im Teilbereich II der Lochgröße des Teilbereiches I entspricht, kann in dieser Einstellung der Siebvorrichtung 2 über die gesamte Länge eine einzige Fraktion mit gleicher Partikelgröße ausgesiebt werden. Ausgehend von der gleichen Lochgröße in der in Fig. 4 gezeigten Einstellung ist die Siebvorrichtung 2 jedoch durch das stufenlose Verstellen der relativen Lage der Siebelemente 4 zueinander so einstellbar, daß sich im Teilbereich II wieder zum Teilbereich I unterschiedliche Lochgrößen ergeben, wie in Fig. 2 gezeigt.

Die gezeigte Anordnung und Ausbildung der Lochbilder ist nur als beispielhaft zu verstehen. In alternativen Ausgestaltungen können sich aufeinanderliegende Siebelemente 4 über die gesamte Länge der Siebvorrichtung erstrecken, oder anstelle der gezeigten 1/3 zu 2/3 Verteilung können andere Längenverhältnisse zwischen verstellbaren und nichtverstellbaren Sieblochgrößen gewählt werden. Die Siebvorrichtung 2 kann mit mehreren, die Siebfläche in Längs-, Quer- oder sonstiger Richtung unterteilenden Siebelementen 4 ausgestattet sein, und die Siebelemente 4 können in mehreren Richtungen verstellbar ausgebildet sein. So können auch im Teilbereich I verstellbare Siebe angeordnet werden, durch die mögliche Lochgrößen-Spreizung nochmals erweitert werden kann. Die Siebvorrichtung kann auch mit mehr als zwei Teilbereichen ausgestattet werden. Es ist auch möglich, die aufeinander liegenden Siebelemente 4 mit vor- oder nachgeordneten einlagig ausgebildeten, fix oder austauschbar montierten Siebblechen zu kombinieren. So könnte im Teilbereich I anstelle des verlängerten oberen Siebelementes 4 ein separates Siebelement 4 angeordnet sein, dem kein verstellbares zweites Siebelement 4 zugeordnet ist.

Hinsichtlich der Ausformung der Sieblöcher 8 sind alle Geometrien und Kombinationen von Lochformen möglich, die für den jeweiligen Anwendungsfall günstig sind. Neben kreisförmigen, elliptischen, quadratischen, rechteckigen, trapezförmigen und sonstigen vieleckigen Lochformen, die ausschließlich auf einem Sieb verwendet sind, können die genannten Lochformen auch in beliebiger Anordnung miteinander kombiniert werden.

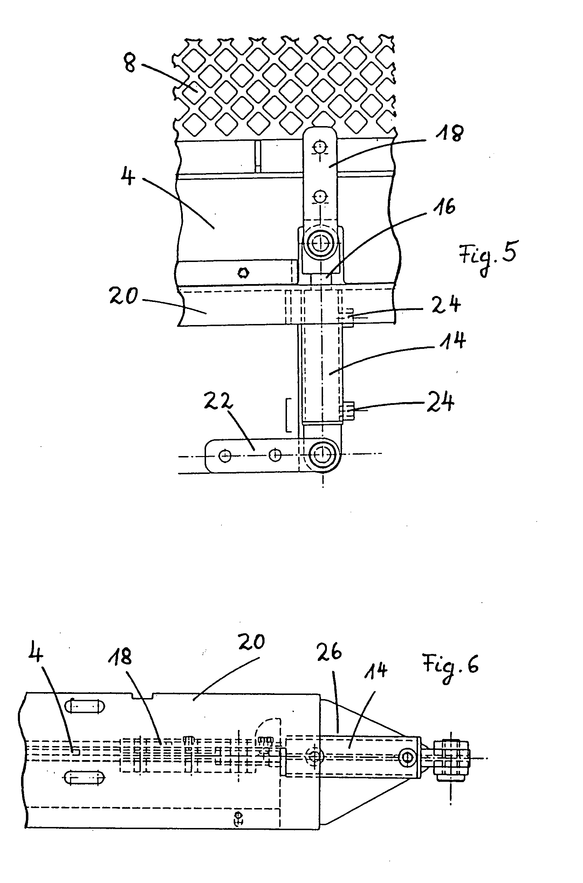

In Fig. 5 ist eine Sicht von oben auf eine Verstellvorrichtung für eine erfindungsgemäße Siebvorrichtung 2 dargestellt. Ein Hydraulikzylinder 14 greift mit seiner Kolbenstange 16 an einer Lasche 18 an, die fest mit dem verstellbaren Siebelement 4 verbunden ist. Das Siebelement 4 wird von einem Rahmen 20 umfaßt. Mit dem Rahmen 20 ist eine Halterung 22 verbunden, an der der Hydraulikzylinder 14 an seiner den verstellbaren Siebelementen 4 abgewandten Seite festgelegt ist. Der Hydraulikzylinder 14 wird zur Siebverstellung über die Hydraulikanschlüsse 24 mit einer Hydraulikflüssigkeit beaufschlagt. Das Schaltventil sowie die Ansteuerung des Schaltventils sind im Ausführungsbeispiel nicht näher dargestellt. Anstelle eines Hydraulikzylinders können auch andere motorische Stellmittel, wie beispielsweise ein Elektromotor, eingesetzt werden. Bevorzugt ist das motorische Stellmittel mit einer Betätigungsvorrichtung fernbetätigbar. Auch eine manuelle Verstellung mit einem einfachen Stellhebel ist möglich.

In Fig. 6 ist ein Querschnitt durch eine motorische Stellvorrichtung zur Veränderung der relativen Lage von Siebelementen 4 zueinander gezeigt. Gut sichtbar ist die Konsole 26, an der die Halterung 22 befestigbar ist. Die motorische Stellvorrichtung kann an jeder Seite der Siebvorrichtung 2 angebracht werden, je nach dem, in welche Richtung eine Siebverstellung gewünscht ist. Die Verstellvorrichtung kann sowohl an dem oberen wie auch dem untern Siebelement 4 angreifen, sie kann aber auch ein im Ausführungsbeispiel nicht gezeigtes drittes Siebelement 4 verstellen, daß wie eine Art Blende zwischen die äußeren Siebelemente 4 gelegt sein kann. Prinzipiell macht es auch keinen Unterschied, ob das obere oder untere Siebelement feststehend oder beide Siebelemente 4 verstellbar sind. Siebelemente 4 können auch jeweils in unterschiedliche Richtungen verstellbar angeordnet sein, um im Zusammenwirken mit einem speziellen Lochbild der Siebelemente 4 besondere Formen und Abmessungen der gemeinsamen Sieböffnungen 10 einstellen zu können.

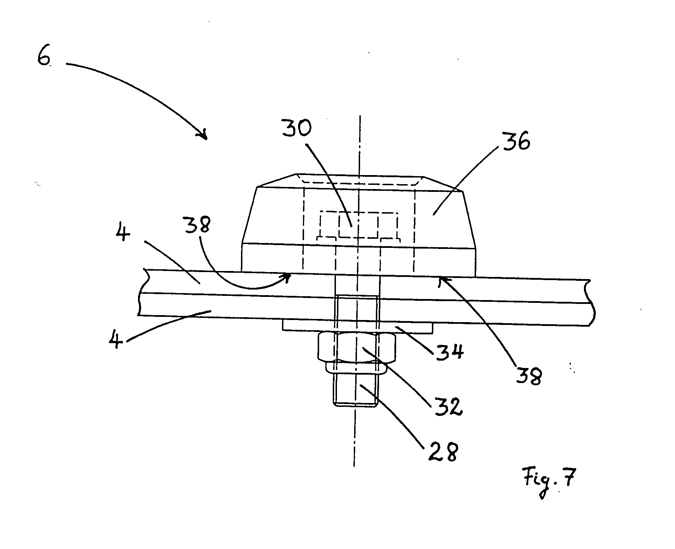

In Fig. 7 ist eine Seitenansicht eines Spannelementes 6 dargestellt. Das Spannelement 6 besteht aus einem Schraubbolzen 28, dessen Schraubkopf 30 auf einer Seite der miteinander zu verpressenden Siebelemente 4 liegt. Der Schraubbolzen 28 ist durch Ausnehmungen in den Siebelementen 4 hindurchgeführt und auf der anderen Siebseite mit einer Schraubmutter 32 verschraubt. Die von der Schraubmutter 32 ausgehende Anpreßkraft wird durch eine Unterlegscheibe 34 auf eine größere Fläche des mit der Kraft beaufschlagten Siebelementes 4 verteilt. Auf der Seite des Schraubkopfes 30 ist dieser in einem Kraftelement 36 gelagert. Das Kraftelement 36 wird vom Schraubkopf 30 mit einer Auflagefläche 38 auf die Oberfläche des ihm zugewandten Siebelementes 4 gedrückt.

Die Preßkraft eines Spannelementes 6 sollte so bemessen sein, daß die von ihm zusammengedrückten Siebelemente 4 während des Betriebes fest aufeinanderliegen. Insbesondere soll die Preßkraft der Spannelemente 6 verhindern, daß Material zwischen die aufeinanderliegenden Siebelemente 4 dringen kann. Der Aufbau von Fremdmaterial zwischen aufeinanderliegenden Siebelementen 4 kann zur Ausbildung von Hohlräumen, Taschen und schließlich zur vollständigen Zerstörung der Siebelemente 4 führen. Durch das Zusammenpressen der Siebelemente 4 können sich diese gegenseitig stabilisieren, was insbesondere im Hinblick auf die schwingende Bewegung von Sieben von Bedeutung ist. Außerdem soll die von den Spannelementen 6 aufgebrachte Preßkraft bewirken, daß die Lochkanten eines Siebelementes die innenliegende Oberfläche des anderen Siebelementes abschaben und im Zusammenwirken mit den Lochkanten des anderen Siebelementes scherenartig sich ansammelnde Fremdkörper in den Sieblöchern 8 abschneiden. Das Spannelement 6 hat also eine wichtige Funktion für die Dauerhaltbarkeit und Reinigungsfähigkeit der Siebvorrichtung 2.

Die von dem Spannelement 6 ausgeübte Preßkraft sollte allerdings nicht so hoch eingestellt werden, daß die relative Lage der Siebelemente 4 zueinander nicht mehr veränderbar ist. Entweder ist die von den Spannelementen 6 ausgeübte Preßkraft nur so hoch, daß ein Verrutschen und selbsttätiges Verstellen der Siebelemente 4 im Betrieb verhindert ist, bei Aufbietung einer zusätzlichen Verstellkraft jedoch noch eine Relatiwerschiebung zwischen den Siebelementen 4 möglich ist, oder die Preßkraft der Spannelemente 6 ist variabel. So wäre es möglich, die Schraubverbindung durch Lösen der Schraubmutter 32 zu lockern, um danach die relative Lage der Siebelemente 4 zu verändern, um dann die neu eingestellte Siebeinstellung durch festes Anziehen der Schraubmutter 32 wieder zu fixieren.

Im Ausführungsbeispiel besteht das Kraftelement 36 aus einem Hartgummi oder einem Kunststoff, dessen Auflagefläche 38 einen hohen Reibungskoeffizienten aufweist. An Stelle eines Hartgummiblocks können aber auch andere Elemente, die eine Spannkraft in eine Verbindung einzubringen vermögen, eingesetzt werden, zu denken ist hier beispielsweise an Tellerfedern, Spiralfedern, Spannklammern oder sonstige aus der Befestigungstechnik bekannte Lösungen.

Unterhalb der Siebvorrichtung 2 können entsprechende Auffang- oder Abfördervorrichtungen angeordnet sein, die die ausgesiebten Fraktionen sammeln und für weitere Be- oder Verarbeitungsschritte bereithalten. Die Anwendung der erfindungsgemäßen Lösung ist nicht auf Flachsiebe beschränkt, sondern kann entsprechend auch auf Rundsiebe oder konische Siebe übertragen werden. Die erfindungsgemäßen Siebe können in vielfältigen Anwendungen eingesetzt werden, so z. B. in Steinbrüchen, Betonwerken, Kompostieranlagen, landwirtschaftlichen Maschinen, Produktionsanlagen oder Verpackungsmaschinen.

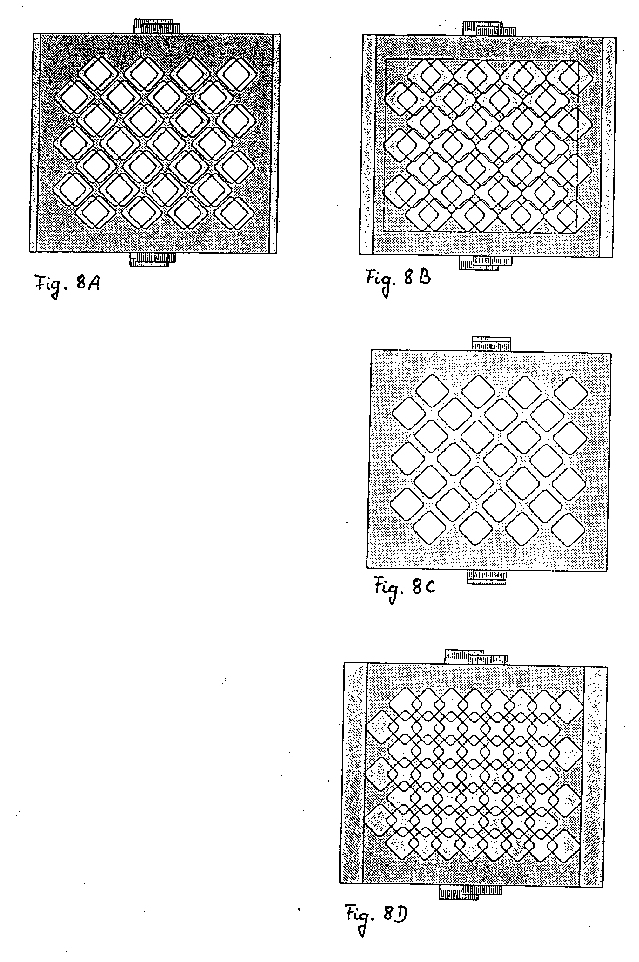

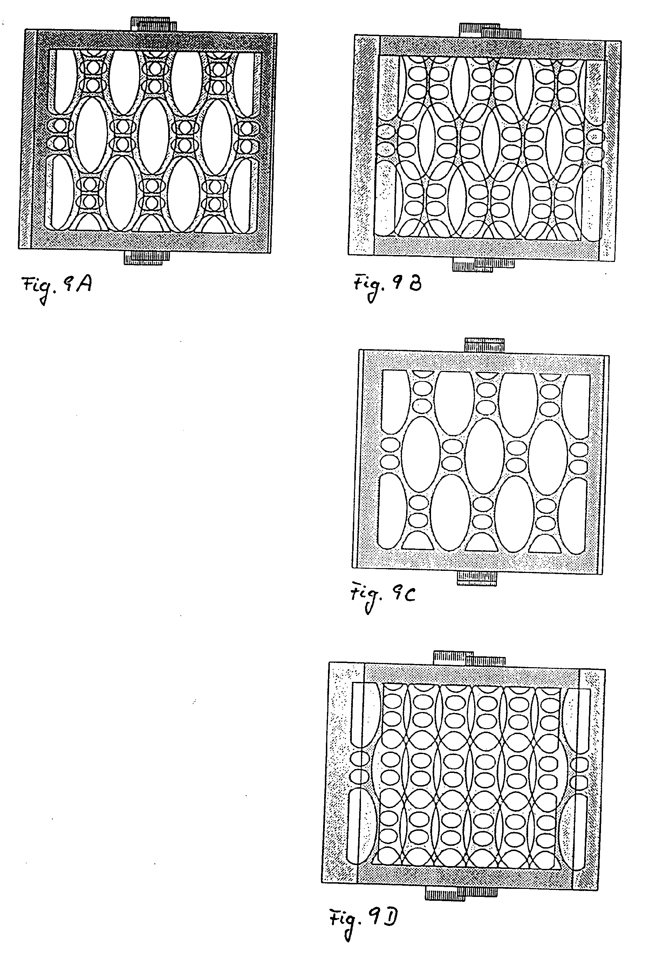

Die Figuren 8 ― 11 zeigen jeweils in den Bildern A ― D unterschiedliche Lochbilder bei unterschiedlicher relativer Lage der Siebelemente 4 zueinander. Bei allen Figuren 8 ― 11 kann sich je nach relativer Lage der Siebelemente 4 die Anzahl der gemeinsam ausgebildeten Sieböffnungen 10 pro betrachtetem Siebloch 8 verändern. Je nach Geometrie der Sieblöcher 8 können sich Sieböffnungen 10 ausbilden, die länger sind als breit, die Ecken aufweisen oder gerundete Lochgrenzen, wobei bei unterschiedlichen Lochgrößen wie in Figur 9 gezeigt auch unterschiedlich durchmischte Fraktionen aussiebbar sind.

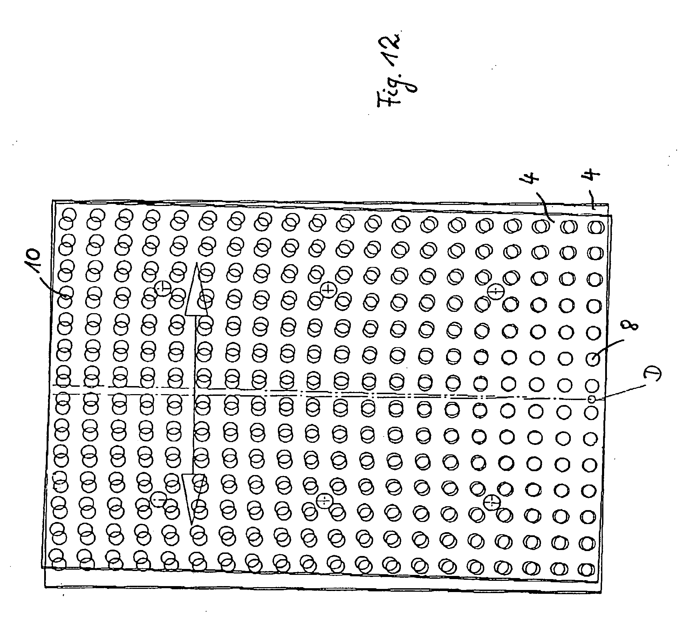

In Figur 12 ist eine Ausführung einer erfindungsgemäßen Siebvorrichtung gezeigt, bei der die unterschiedlichen Lochgrößen einstellbar sind. In der Grundstellung, in der die Sieblöcher 8 genau aufeinander liegen, ergeben sich bei dieser Siebvorrichtung gleich große Lochgrößen. Dreht man jedoch eines der Siebelemente 4 relativ zum anderen Siebelement 4 um die Drehachse D, so ergeben sich unterschiedliche Lochgrößen in Abhängigkeit davon, wie weit die betreffende Sieböffnung 10 vom Drehpunkt D entfernt ist. In direkter Nähe zum Drehpunkt D sind die Sieböffnungen 10 durch die dargestellte Drehung kaum verkleinert, während die Sieböffnungen 10 am gegenüberliegenden Ende des Siebelements 4 nahezu geschlossen sind.

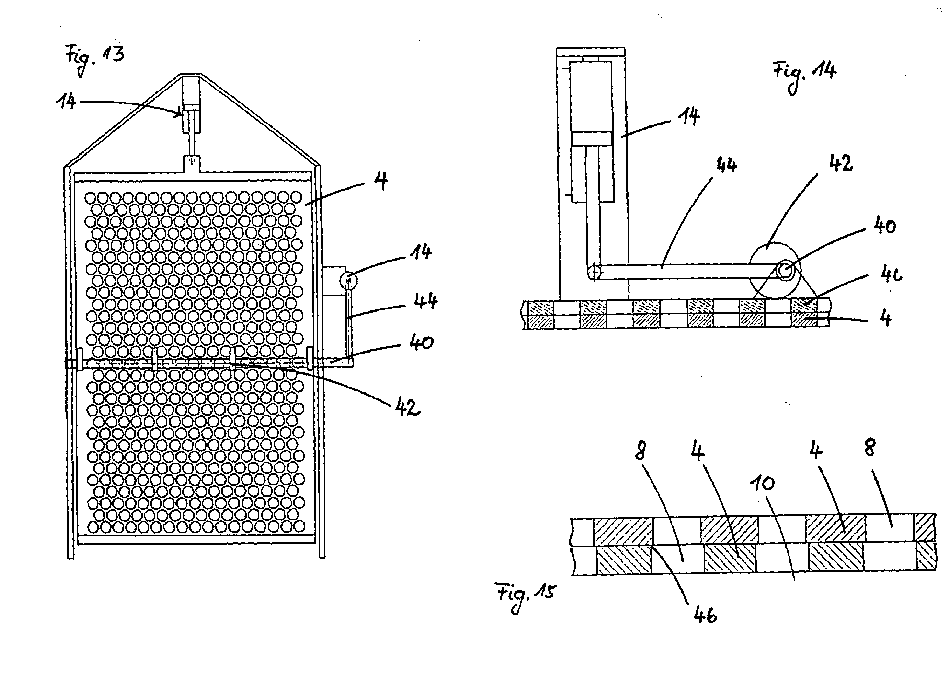

In Figur 13 ist eine Siebvorrichtung 2 aus einer Sicht von oben dargestellt. Als Spannelement 6 ist quer über ein Siebelement 4 verlaufend eine Welle 40 angeordnet, die Exzenter 42 aufweist. An der Welle 40 ist ein Exzenterhebel 44 befestigt, der von einem Hydraulikzylinder 14 betätigbar ist. Zur Verstellung des Siebs kann nun wie folgt vorgegangen werden: der Hydraulikzylinder 14 dreht durch Betätigung die Exzenter 42 so, daß diese allenfalls unter geringem Anpreßdruck auf dem oberen Siebelement 4 aufliegen. Sodann kann das verstellbare Siebelement 4 in eine neue Sollposition verschoben werden durch die Betätigung der Verstellvorrichtung 14. Danach klemmt der Hydraulikzylinder 14 durch Betätigung des Exzenterhebels 44 die Exzenter 42 wieder fest. Bei einer funktionsmäßigen Kopplung der Betätigung der Verstellvorrichtung 10 mit der motorischen Betätigung des Exzenterhebels 44 - beispielsweise durch entsprechende Elektronik - kann die Verstellung der Sieböffnung sehr materialschonend vorgenommen werden, da die Verstellung nur unter allenfalls geringem Anpreßdruck der Spannelemente 6 erfolgt. Über den Hydraulikzylinder 14 ist mit einem Proportionalventil die Stellkraft und damit die Anpreßkraft der Exzenter 42 variabel einstellbar. Die beschriebene Siebklemmvorrichtung ist in Figur 14 in einer Seitenansicht dargestellt.

In Figur 15 ist ein Querschnitt durch aufeinanderliegende Siebelemente 4 gezeigt. Die Sieblöcher 6 sind dabei so ausgebildet, daß die Sieblöcher 8 des oberen Siebelements 4 kleiner sind als die Sieblöcher 8 des unteren Siebelements 4. Dadurch bildet sich am Übergang vom oberen Siebloch 8 zum unteren Siebloch 8 ein Vorsprung aus, der eine Schnittkante 46 bildet. Bei einer solchen Ausgestaltung können klebrige Siebgüter besser durch die Sieböffnung 10 fallen, weil sie nicht so leicht an den Lochwänden anhaften und bei einem Reinigungshub leichter abfallen.

## Patentansprüche

1. Siebvorrichtung (2) mit zumindest zwei aufeinander liegenden Siebelementen (4), die jeweils eine Mehrzahl von Sieblöchern (8) aufweisen, die abhängig von der relativen Lage der Siebelemente (4) zueinander gemeinsame Sieböffnungen (10) ausbilden, **dadurch gekennzeichnet, daß** Sieböffnungen (10) der Siebvorrichtung (2) in Förderrichtung (F) unterschiedliche Lochgrößen aufweisen und/oder unterschiedliche Lochgrößen von Sieböffnungen (10) in Förderrichtung (F) durch das Verstellen in eine relative Lage der Siebelemente (4) zueinander einstellbar sind.

2. Siebvorrichtung (2) nach Anspruch 1, **dadurch gekennzeichnet, daß** Sieblöcher (8) zumindest eines Siebelements (4) größer sind als andere Sieblöcher (8), die in Förderrichtung (F) gesehen vor diesen Sieblöchern (8) angeordnet sind.

3. Siebvorrichtung (2) nach Anspruch 1 oder 2, **dadurch gekennzeichnet, daß** in einem Teilbereich (I, II) der Förderstrecke (F) über die Siebvorrichtung (2) zumindest eines der aufeinander liegenden Siebelemente (4) verstellbar ist.

4. Siebvorrichtung (2) nach einem der vorhergehenden Ansprüche, **dadurch gekennzeichnet, daß** ein Siebelement (4) in Förderrichtung (F) gesehen Sieblöcher (8) aufweist, die eine unterschiedliche Größe aufweisen.

5. Siebvorrichtung (2) nach einem der vorhergehenden Ansprüche, **dadurch gekennzeichnet, daß** die relative Lage von Siebelementen (4) zueinander motorisch verstellbar ist.

6. Siebvorrichtung (2) nach einem der vorhergehenden Ansprüche, **dadurch gekennzeichnet, daß** der Verstellweg eines Siebelementes (4) durch Langlöcher (12) und/oder Steuerkanten zwangsgeführt ist.

7. Siebvorrichtung (2) nach einem der vorhergehenden Ansprüche, **dadurch gekennzeichnet, daß** die Siebelemente (4) durch Spannelemente (6) aufeinander gepreßt sind.

8. Siebvorrichtung (2) nach einem der vorhergehenden Ansprüche, **dadurch gekennzeichnet, daß** Siebelemente (4) ein Lochbild zeigen, durch das in einer relativen Lage der Siebelemente (4) zueinander übereinander liegende Sieblöcher (8) der Siebelemente eine gemeinsame Sieböffnung (10) bilden, und das gleiche Siebloch (8) eines Siebelements (4) bei einer anderen relativen Lage der Siebelemente (4) zueinander mit mehreren Sieblöchern (8) eines anderen Siebelements (4) mehrere gemeinsame Sieböffnungen (10) bilden.
